Europäisches Patentamt

European Patent Office

Office européen des brevets

(19)

(11) Publication number: 0 388 829
A2

## (12) EUROPEAN PATENT APPLICATION

(21) Application number: 90105100.3

(22) Date of filing: 19.03.90

(51) Int. Cl.⁵: H05B 3/50, H05B 3/58,
H05B 3/42

(30) Priority: 24.03.89 IT 8412489

(43) Date of publication of application:
26.09.90 Bulletin 90/39

(84) Designated Contracting States:
CH DE ES FR GB GR IT LI SE

(71) Applicant: I.R.C.A. S.p.a. Industria Resistenze
Corazzate e Affini
Viale Venezia
I-31020 San Vendemiano (Treviso)(IT)

(72) Inventor: Colombo, Roberto
via Bachelet, 24
I-31015 Conegliano, Treviso(IT)
Inventor: Marcer, Sandro
Viale Venezia
I-31020 San Vendemiano, Treviso(IT)
Inventor: Sonego, Gino
viale Venezia
I-31020 San Vendemiano, Treviso(IT)
Inventor: Wimmer, Willy
Wolkersdorf, 4
D-8229 Kirchanschoering(DE)

(74) Representative: Piovesana, Paolo
Corso del Popolo, 70
I-30172 Venezia-Mestre(IT)

(54) Heating element for household electrical appliances.

(57) A heating element for household electrical appliances comprising a tubular member connected into the water recirculation circuit of the household electrical appliance, and an armoured resistance element wound about said tube. The tubular member (1) is constructed of stainless steel and the armoured resistance element has an external part consisting of a profiled bar (6,6') of good heat conducting material having at least one longitudinal flange (8) by which contact with said tubular member (1) is established and along which said profiled bar (6,6') is brazed to it.

FIG.1

This invention relates to a heating for household electrical appliances.

Heating elements for household electrical appliances are known comprising essentially a tubular metal member through which the water to be heated is passed and an armoured resistance element wound as a spiral about the outside of said tube. Various solutions have been proposed in the past for solving the problem of effectively securing the armoured resistance element to the tubular member, these solutions differing from each other essentially by the nature of the tubular member and the system used for securing the armoured resistance element to it, which securing system must in any event ensure a large contact surface area between the two and a heat transfer from the resistance element to the tubular member which is as uniform as possible.

A known solution comprises interposing between the tubular member and the resistance element a shell of a good heat conducting material and to wrap the armoured resistance element as a spiral about this. To provide a greater contact surface between the armoured resistance element and the intermediate shell, the armoured resistance element has its armour flattened over the region in contact with the shell. This solution has however resulted in certain drawbacks, and in particular:
- the need for double brazing (between the armoured resistance element and the intermediate shell and between the intermediate shell and the tubular member),
- special shaping of the armoured resistance element,
- a larger overall transverse dimension for a given inner diameter of the tubular member.

The problem is solved according to the invention by a heating element for household electrical appliances comprising a tubular member connected into the water recirculation circuit of the household electrical appliance, and an armoured resistance element wound about said tube, characterised in that the tubular member is constructed of stainless steel and the armoured resistance element has an external part consisting of a profiled bar of good heat conducting material having at least one longitudinal flange by which contact with said tubular member is established and along which said profiled bar is brazed to it.

A preferred embodiment of the present invention and two modifications thereof are described hereinafter with reference to the accompanying drawings in which:
Figure 1 is a partly sectional view of a first embodiment of a heating element according to the invention;
Figure 2 is an enlarged detailed view of the connection region between the heating element and the tubular member;
Figure 3 is the same view as Figure 2 but of a modified version;
Figure 4 is the same view as Figure 2 but of a further modified version shown in an intermediate stage during the application of the armoured resistance element to the tubular member; and
Figure 5 is the same view as Figure 4 but showing a final stage in the application of the armoured resistance element to the tubular member.

As can be seen from the figures the heating element according to the invention comprises essentially a tubular member 1 for connection into the water recirculation circuit of the household electrical appliance, and an armoured resistance element 2 wound as a spiral around it.

The tubular member 1 is constructed of stainless steel and has its inner surface lined with a layer of protective material which prevents its corrosion by the water and the formation of calcareous incrustations. This lining is preferably obtained by teflon coating or chromium or nickel plating or by the use of ceramic or fluorinated ceramic compounds.

The armoured resistance element 2 is of traditional type, ie it comprises a nickel-chrome resistance element 3 extending within tubular armour 4 of iron, steel, aluminium or copper and kept centered thereto by insulating material 5 consisting for example of magnesium oxide. The tubular armour 4 can be of right circular or general polygonal cross-section, for example triangular.

The armoured resistance element 2 is inserted into a profiled bar 6 of good heat conducting material and comprising a tubular portion 7 which completely surrounds the resistance element 2, and a pair of appendices 8 which extend tangentially from the tubular portion 3 in opposite directions to substantially increase the area of contact between the profiled bar 6 and the tubular member 1 when the profiled bar 6 together with the armoured resistance element 2 is wound about it.

The armoured resistance element 2 is inserted into the profiled bar 6 by traditional methods, which ensure a complete mechanical connection between the two and thus effective heat transfer.

The connection between the profiled bar 6 and the tubular member 1 about which it is spirally wound is done by brazing. For this purpose the total length of the two appendices 8 is just less than the winding pitch of the profiled bar 6 on the tubular member 1, so that a narrow gap remains between one turn and the next, to be filled with bracing alloy.

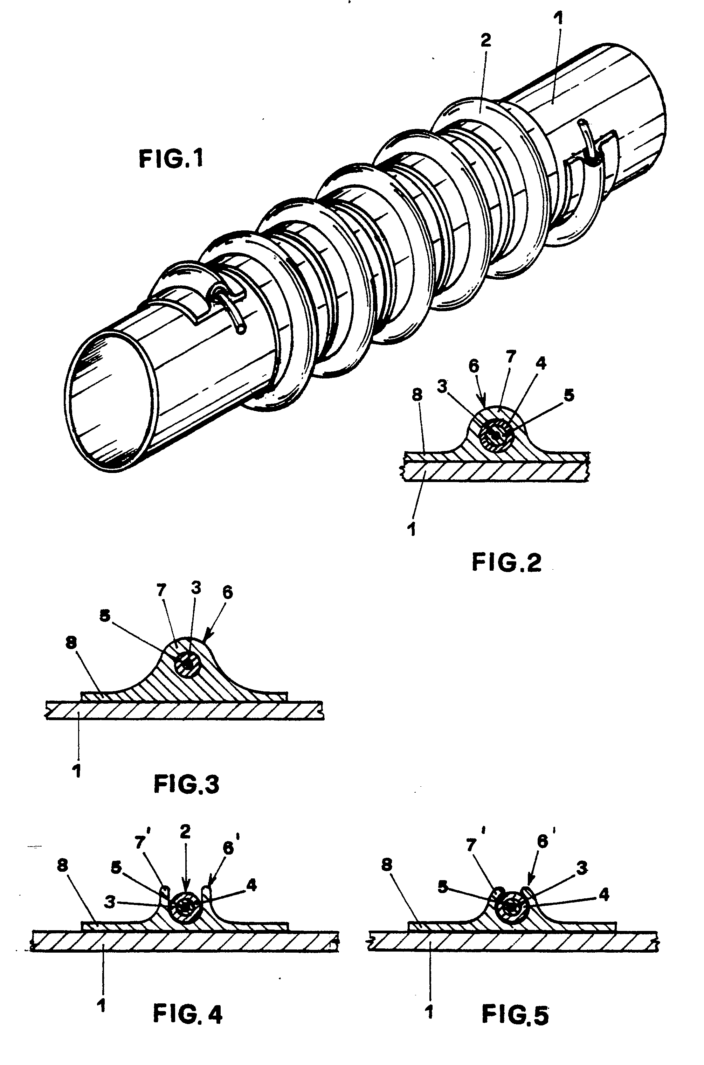

In the embodiment shown in Figure 3, the profiled bar 6 also forms the armour of the resistance element 2, with obvious saving both by the elimination of the traditional tubular sheath of the armoured resistance element and of the operations involved in inserting the armoured resistance element into the profiled bar 6.

In the embodiment shown in Figures 4 and 5, the profiled bar 6' does not have a closed tubular portion but instead an open tubular portion, ie formed from two parallel longitudinal ribs 7' spaced apart sufficiently to allow tne armoured resistance element to be inserted between them. The connection between the two is made stable by the effect of the operation of spirally wounding the profiled bar 6' with the inserted resistance element 2 about the tubular member 1, which results in consequent mechanical deformation of the ribs 7' to the extent of embracing the resistance element 2 (see Figure 5).

This embodiment is advantageous because of the greater ease with which the resistance element 2 can be incorporated into the profiled bar 6'.

In a further modification, not shown on the drawings, a brazing alloy is fed into the gap between the two deformed ends of the two ribs 7' to provide even greater connection between the resistance element and profiled bar.

Independently of the embodiment used, the advantages of the heating element according to the invention are apparent, and in particular:
- it is of very economical construction as only one brazing operation is required between the profiled bar 6, 6' and the tubular member 1,
- it assures very efficient heat transfer between the armoured resistance element 2 and the tubular member 1 by virtue of the large contact area between the resistance element and profiled bar 6, 6', and of the likewise large contact area between the profiled bar 6, 6' and the tubular member,
- it is of small overall transverse dimension because of the small thickness of the profiled bar 6, 6' interposed between the armoured resistance element 2 and the tubular member 1.

## Claims

1. A heating element for household electrical appliances comprising a tubular member connected into the water recirculation circuit of the household electrical appliance and an armoured resistance element wound about said tube, characterised in that the tubular member (1) is constructed of stainless steel and the armoured resistance element has an external part consisting of a profiled bar (6,6') of good heat conducting material having at least one longitudinal flange (8) by which contact with said tubular member (1) is established and along which said profiled bar (6,6') is brazed to it.

2. A heating element as claimed in claim 1, characterised in that the profiled bar (6,6') is provided with a tubular portion (7,7') adhering to the exterior of the armoured resistance element (2), and two longitudinal flanges (8) extending tangentially from said tubular portion (7,7') on opposite sides thereof.

3. A heating element as claimed in claim 1, characterised in that the tubular portion (7,7') of the profiled bar (6,6') is of right circular cross-section.

4. A heating element as claimed in claim 1, characterised in that the tubular portion (7,7') of the profiled bar (6,6') is of right polygonal cross-section.

5: A heating element as claimed in claim 1, characterised in that the width of the longitudinal flange or flanges (8) of the profiled bar (6,6') is just less than the winding pitch of said profiled bar (6,6') about said tubular member (1) so that when the former is wound about the latter a narrow spiral gap is formed into which the brazing alloy is fed.

6. A heating element as claimed in claim 2, characterised in that the tubular portion (7) of the profiled bar (6) adheres to the exterior of the armour (4) of the armoured resistance element (2).

7. A heating element as claimed in claim 2, characterised in that the tubular portion (7) of the profiled bar (6) itself forms the armour of the armoured resistance element (2).

8. A heating element as claimed in claim 1, characterised in that the profiled bar (6') comprises two longitudinal ribs (7') between which the armoured resistance element (2) is housed and is retained in its seat by the deformation of said ribs (7') about it.

9. A heating element as claimed in claim 6, characterised in that the armoured resistance element (2) is brazed to the two bant-over ribs (7') of the profiled bar (6').

10. A heating element as claimed in one or more of the preceding claims, characterised in that the inner surface of the tubular member (1) is lined with a layer of teflon.

11. A heating element as claimed in one or more of the preceding claims, characterised in that the inner surface of the tubular member (1) is nickel plated.

12. A heating element as claimed in one or more of the preceding claims, characterised in that the inner surface of the tubular member (1) is chromium plated.

13. A heating element as claimed in one or more of the preceding claims, characterised in that the inner surface of the tubular member (1) is treated with ceramic compounds which are possibly fluorinated.

EP 0 388 829 A2

FIG.1

FIG.2

FIG.3

FIG. 4

FIG.5